# EUROPEAN PATENT SPECIFICATION

(11) **EP 4 119 726 B1**
(45) Date of publication and mention of the grant of the patent: **16.04.2025**
(21) Application number: 21768656.7
(22) Date of filing: 11.03.2021
(51) Int. Cl.: E01C 19/48, G06Q 10/06, G06Q 10/08

(54) **CONSTRUCTION MANAGEMENT SYSTEM AND ASPHALT FINISHER**
BAUVERWALTUNGSSYSTEM UND ASPHALTFERTIGER
SYSTÈME DE GESTION DE CONSTRUCTION ET FINISSEUR D'ASPHALTE

(30) Priority: 11.03.2020 JP 2020041584; 11.03.2020 JP 2020041586
(43) Date of publication of application: 18.01.2023
(73) Proprietor: Sumitomo Construction Machinery Co., Ltd., Tokyo 141-6025 (JP)
(72) Inventor: MINO, Hisaho, Chiba-shi, Chiba 263-0001 (JP)
(74) Representative: Louis Pöhlau Lohrentz
(86) International application number: PCT/JP2021/009707
(87) International publication number: WO 2021/182556

(56) References cited:
- WO-A2-2018/130993
- JP-A- 2010 073 031
- JP-A- 2012 229 605
- JP-A- 2016 224 963
- US-A1- 2017 167 089
- US-A1- 2019 188 620
- US-B2- 9 611 595

## Description

### TECHNICAL FIELD

The present disclosure relates to a construction management system for managing construction of roads and to an asphalt finisher.

### BACKGROUND ART

Conventionally, a system capable of transmitting and receiving data between a plant and an asphalt finisher through a server is known (see Patent Document 1). In this system, the plant is configured to transmit, to the asphalt finisher via the server, information about the temperature and the amount of paving material produced and the point in time at which a specified amount of paving material has been loaded into a dump truck.

Furthermore, a construction management system is known including a plant, a plurality of dump trucks, and a paving machine, wherein the production of paving material and the loading of the dump trucks at a desired time is optimized in order to reduce idling time at the paving site but still maintaining an adequate supply of paving material so that the paving machines remain productive (see Patent Document 2).

### RELATED ART DOCUMENT

### PATENT DOCUMENT

Patent Document 1: Japanese Unexamined Patent Publication No. 2012-229605
Patent Document 2: United States Patent US 9 611 595 B2

### SUMMARY OF THE INVENTION

### PROBLEMS TO BE SOLVED BY THE INVENTION

However, in the above-described systems, the asphalt finisher is not configured to calculate a weight of the paving material supplied to the asphalt finisher based on the information about the weight of the paving material transmitted from the dump truck and to prompt maintenance of the asphalt finisher in response to determining that the calculated weight becomes equal to or more than a predetermined value.

Therefore, it is desirable to facilitate the maintenance and management of the asphalt finisher.

### MEANS FOR SOLVING THE PROBLEMS

The aforementioned objective is achieved by a construction management system and an asphalt finisher according to the independent claims.

### EFFECTS OF THE INVENTION

According to the above-described means, the manager of the asphalt finisher can timely be informed of the replacement timing of consumable parts such as the screed plate or the conveyor plate.

### BRIEF DESCRIPTION OF THE DRAWINGS

FIG. 1 is a drawing illustrating a configuration example of a construction management system.
FIG. 2 is an explanatory diagram of a scene in which information is transmitted from a plant to a dump truck.
FIG. 3 is a flowchart of first transmission processing.
FIG. 4A is an explanatory diagram of a scene in which information is transmitted from a dump truck to an asphalt finisher.
FIG. 4B is an explanatory diagram of a scene in which information is transmitted from the dump truck to the asphalt finisher.
FIG. 4C is an explanatory diagram of a scene in which information is transmitted from the dump truck to the asphalt finisher.
FIG. 5 is a flowchart of second transmission processing.

### EMBODIMENT OF THE INVENTION

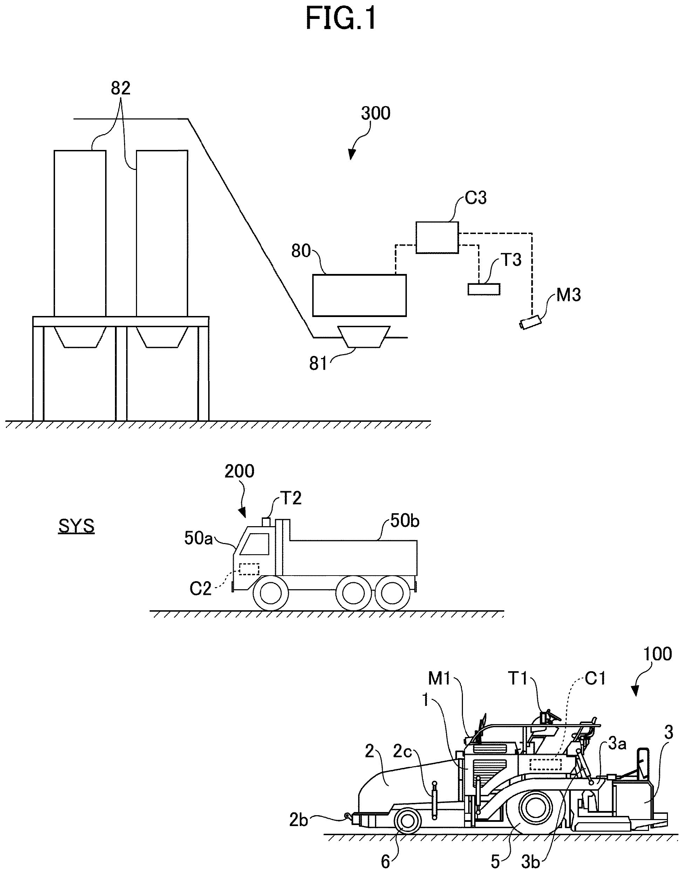

First, a construction management system SYS according to an embodiment of the present invention will be described with reference to FIG. 1. FIG. 1 is a drawing illustrating a configuration example of a construction management system SYS.

The construction management system SYS mainly includes an asphalt finisher 100, a dump truck 200, and a plant 300.

The asphalt finisher 100 is a machine used for paving roads and the like. Specifically, the asphalt finisher 100 mainly includes a tractor 1, a hopper 2, and a screed 3.

The tractor 1 is a mechanism for running the asphalt finisher 100. In the example illustrated in FIG. 1, the tractor 1 moves the asphalt finisher 100 by rotating rear wheels 5 with a rear wheel traveling motor and rotating front wheels 6 with a front wheel traveling motor. The rear wheel traveling motor and the front wheel traveling motor are hydraulic motors which are rotated by receiving supply of hydraulic oil from a hydraulic pump. The tractor 1 may have crawlers instead of wheels. A controller C1 and a communication device T1 are provided on the tractor 1. The controller C1 and the communication device T1 may be integrated into a portable device such as a tablet PC or a smartphone. The portable device such as a tablet PC or a smartphone may be a device possessed by an operator of the asphalt finisher 100, a worker working around the asphalt finisher 100, or a manager of the construction site thereof.

The controller C1 is a control device provided on the asphalt finisher 100. In the example illustrated in FIG. 1, the controller C1 is a computer including a CPU, a volatile storage device, and a nonvolatile storage device, and is provided on the tractor 1. The controller C1 is configured to control the movement of the asphalt finisher 100. Various functions of the controller C1 are implemented, for example, by the CPU executing a program stored in the nonvolatile storage device. The various functions implemented by the controller C1 include, for example, a function for controlling the discharge amount of the hydraulic pump for discharging hydraulic oil for driving hydraulic actuators, and a function for controlling the flow of hydraulic oil between the hydraulic actuators and the hydraulic pump. The hydraulic actuators include a hydraulic cylinder and a hydraulic motor.

The various functions implemented by the controller C1 include a function of recognizing the dump truck 200 based on the output of a space recognition apparatus M1 and a function of requesting the dump truck 200 to transmit predetermined information via wireless communication. The controller C1 is a control device designed especially for the function of exchange of information between the asphalt finisher 100 and the dump truck 200.

The communication device T1 is configured to control communication between the asphalt finisher 100 and an external device. In the example illustrated in FIG. 1, the communication device T1 is configured to control radio communication with a communication device T2 provided on the dump truck 200. However, the communication device T1 may be a reception device having only a receiving function. In this case, the communication device T1 functions as a device for receiving information transmitted from the dump truck 200.

The hopper 2 is a mechanism for receiving a paving material. The paving material is, for example, an asphalt mixture. In the example illustrated in FIG. 1, the hopper 2 is provided on the front side of the tractor 1 and is configured to be opened and closed in the vehicle width direction by a hopper cylinder 2c. The asphalt finisher 100 normally receives the paving material discharged from the loading platform 50b of the dump truck 200 while the hopper 2 is fully opened. The asphalt finisher 100 can continue traveling while pushing the dump truck 200 forward via push rollers 2b even when receiving the paving material discharged from the loading platform of the dump truck 200. When the paving material in the hopper 2 decreases, the operator of the asphalt finisher 100 closes the hopper 2 so that the paving material near the inner wall of the hopper 2 can all be brought to the central portion of the hopper 2. This is to allow a conveyor at the central portion of the bottom surface of the hopper 2 to carry the paving material to the rear side of the tractor 1. The paving material conveyed to the rear side of the tractor 1 is spread by a screw in the vehicle width direction on a roadbed that is situated on the rear side of the tractor 1 and that is situated on the front side of the screed 3.

The space recognition apparatus M1 for monitoring the state in front of the tractor 1 is attached to the tractor 1. The space recognition apparatus M1 is, for example, a monocular camera, a stereo camera, a millimeter wave radar, an ultrasonic sensor, a laser radar, or a LIDAR device. In the example illustrated in FIG. 1, the space recognition apparatus M1 is a monocular camera for capturing an image in front of the tractor 1. In this case, the controller C1 can determine, for example, whether the dump truck 200 is approaching the asphalt finisher 100 or whether the dump truck 200 is in contact with the asphalt finisher 100 based on an image captured by the monocular camera that serves as the space recognition apparatus M1.

The screed 3 is a mechanism for leveling the paving material. In the example illustrated in FIG. 1, the screed 3 mainly includes a main screed and a telescopic screed. The telescopic screed includes a left telescopic screed and a right telescopic screed. The main screed, the left telescopic screed, and the right telescopic screed are arranged with a shift in position in the longitudinal direction. Specifically, the left telescopic screed is disposed behind the main screed, and the right telescopic screed is disposed behind the left telescopic screed. The screed 3 is a floating screed pulled by the tractor 1 and connected to the tractor 1 via a leveling arm 3a. The screed 3 is moved vertically together with the leveling arm 3a by the extension and retraction of a screed lift cylinder 3b.

The dump truck 200 is an example of a transport vehicle for transporting paving materials supplied into the hopper 2 of the asphalt finisher 100. In the example illustrated in FIG. 1, the dump truck 200 is a special dump truck with a movable bumper that is designed especially for transporting paving materials.

Specifically, the dump truck 200 mainly includes a driver's compartment 50a and a loading platform 50b. A controller C2 and a communication device T2 are provided on the dump truck 200. The controller C2 and the communication device T2 may be integrated into a portable device such as a tablet PC or a smartphone. The portable device such as a tablet PC or a smartphone may be a device possessed by the driver of the dump truck 200.

The controller C2 is a control device provided on the dump truck 200. In the example illustrated in FIG. 1, the controller C2 is a computer including a CPU, a volatile storage device, and a nonvolatile storage device, and is provided in the driver's compartment 50a. The controller C2 is configured to control the movement of the dump truck 200. Various functions of the controller C2 are implemented, for example, by the CPU executing a program stored in the nonvolatile storage device.

The various functions implemented by the controller C2 include, for example, a function of transmitting information to the asphalt finisher 100 in response to a request from the asphalt finisher 100, and a function of storing information received from the plant 300 in a nonvolatile storage device. The controller C2 may be a control device designed especially for the function of exchanging information between the asphalt finisher 100 or the plant 300 and the dump truck 200.

The communication device T2 is configured to control communication between the dump truck 200 and the external device. In the example illustrated in FIG. 1, the communication device T2 is configured to control wireless communication between the communication device T1 provided on the asphalt finisher 100 or the communication device T3 provided on the plant 300. However, the communication device T2 may be a reception device having only a receiving function. In this case, the communication device T2 functions as a device for receiving information transmitted from the plant 300. Alternatively, the communication device T2 may be a transmission device having only a transmission function. In this case, the communication device T2 functions as a device for transmitting information to the asphalt finisher 100. The transmitted information may be stored in the storage device of the controller C2 through a data reader (not illustrated) such as a memory card reader provided in the driver's compartment 50a.

The plant 300 is an example of a paving material production facility. In the example illustrated in FIG. 1, the plant 300 mainly includes a mixer 80, a trolley 81, a hot silo 82, and the like.

The mixer 80 is a device for uniformly mixing aggregate, filler (stone powder), asphalt, and the like. The trolley 81 is a device for conveying the mixture discharged from the mixer 80 to the hot silo 82. The hot silo 82 is a device for storing and warming the mixture produced by the mixer 80.

The plant 300 is provided with a controller C3, a space recognition apparatus M3, and a communication device T3. The controller C3 and the communication device T3 may be integrated into a portable device such as a tablet PC or a smartphone. The portable device such as a tablet PC or a smartphone may be a device possessed by the driver of the dump truck 200 or a worker or the like working at the plant 300.

The controller C3 is a control device provided on the plant 300. In the example illustrated in FIG. 1, the controller C3 is a computer including a CPU, a volatile storage device, and a nonvolatile storage device, and is situated in a building attached to the plant 300. The controller C3 is configured to control the space recognition apparatus M3 and the communication device T3. Various functions of the controller C3 are implemented, for example, by the CPU executing a program stored in the nonvolatile storage device. The various functions implemented by the controller C3 include, for example, functions for controlling the movement of the mixer 80, the trolley 81, the hot silo 82, and the like.

The various functions implemented by the controller C3 include a function of recognizing the dump truck 200 based on the output of the space recognition apparatus M3 and a function of transmitting predetermined information to the dump truck 200 via wireless communication. However, the controller C3 may be a control device designed especially for the functions related to exchange of information between the dump truck 200 and the plant 300.

The space recognition apparatus M3 is configured to monitor the state of the dump truck 200 that loads the paving material at the plant 300. The space recognition apparatus M3 is, for example, a monocular camera, a stereo camera, a millimeter wave radar, an ultrasonic sensor, a laser radar, or a LIDAR device. When a millimeter wave radar, an ultrasonic sensor, a laser radar, or the like is used as the space recognition apparatus M3, the space recognition apparatus M3 may be configured to transmit a large number of signals (for example, laser light or the like) to an object and receive the reflected signals. The space recognition apparatus M3 may be configured to detect the distance between the space recognition apparatus M3 and the object, and detect the direction of the object as seen from the space recognition apparatus M3 from the reflected signal. When the space recognition apparatus M3 is configured to receive a reflected signal of a signal transmitted by a LIDAR device or the like, the space recognition apparatus M3 may identify the dump truck 200 by recognizing characters indicated on the license plate based on irregularities on the surface of the license plate of the dump truck 200. Thus, the controller C3 can determine the position, shape, and type of the dump truck 200 by using the space recognition apparatus M3. The space recognition apparatus M3 may include a combination of two or more devices, such as a combination of a monocular camera and a LIDAR device. In the example illustrated in FIG. 1, the space recognition apparatus M3 is a monocular camera for capturing an image of the dump truck 200 parked under the mixer 80. In this case, for example, the controller C3 can recognize the vehicle registration number of the dump truck 200 indicated on the license plate of the dump truck 200 based on the image captured by the monocular camera that serves as the space recognition apparatus M3.

The communication device T3 is configured to control communication between the plant 300 and an external device. In the example illustrated in FIG. 1, the communication device T3 is configured to control radio communication with the communication device T2 provided on the dump truck 200. However, the communication device T3 may be a transmission device having only a transmission function.

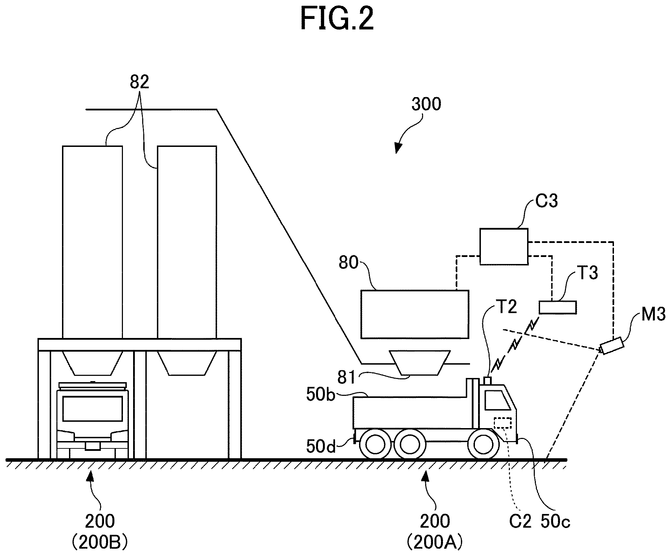

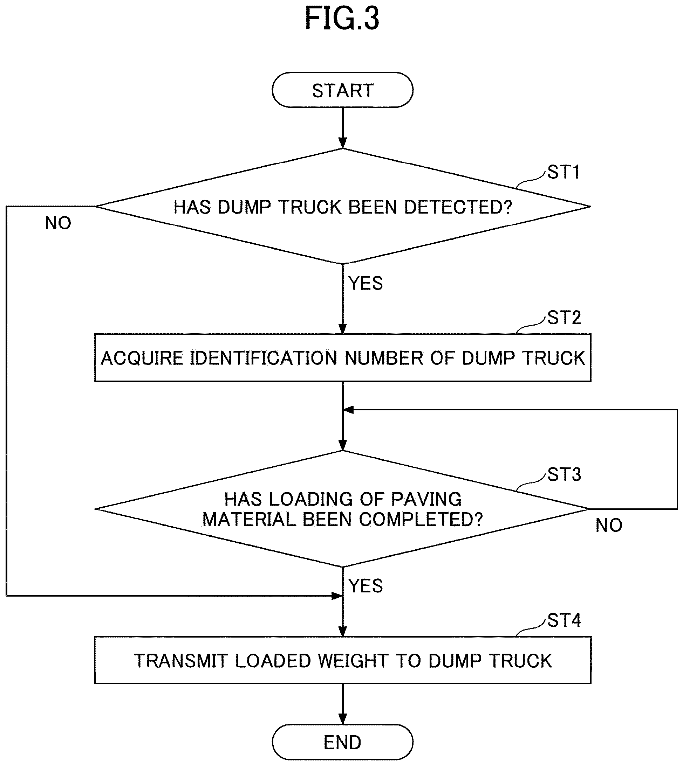

Hereinafter, a process related to the transmission of information from the plant 300 to the dump truck 200 (hereinafter referred to as "first transmission processing") is explained with reference to FIGs. 2 and 3. FIG. 2 is an explanatory diagram of a scene in which information is transmitted from the plant 300 to a dump truck 200. FIG. 2 illustrates a scene in which a dump truck 200A, i.e., an example of the dump truck 200, is parked under the mixer 80 and a dump truck 200B, i.e., another example of the dump truck 200, is parked under the hot silo 82. FIG. 3 is a flowchart showing a flow of an example of the first transmission processing. The controller C3 provided on the plant 300 repeatedly executes the first transmission processing with predetermined control intervals. The following explanation relates to the case where information is transmitted from the plant 300 to the dump truck 200A, but the following explanation is also applicable to the case where information is transmitted from the plant 300 to the dump truck 200B.

First, the controller C3 determines whether the dump truck 200A has been detected (step ST1). In this embodiment, the controller C3 determines whether the dump truck 200A is parked at a predetermined position under the mixer 80 based on the output of the space recognition apparatus M3.

In a case where it is determined that the dump truck 200A has not been detected (NO in step ST1), the controller C3 terminates the first transmission processing currently executed.

In a case where it is determined that the dump truck 200A has been detected (YES in step ST1), the controller C3 acquires the identification number of the dump truck 200A (step ST2). In this embodiment, the identification number of the dump truck 200A is the vehicle registration number indicated on a front license plate 50c of the dump truck 200A.

Specifically, the controller C3 can recognize the vehicle registration number of the dump truck 200A as an identification number by performing image recognition processing on the image of the front license plate 50c captured by the monocular camera that serves as the space recognition apparatus M3. Note that the controller C3 may recognize the vehicle registration number of the dump truck 200A as an identification number by performing image recognition processing on the image of a rear license plate 50d captured by the monocular camera.

Alternatively, the controller C3 may use a device other than the space recognition apparatus M3 to acquire the identification number of the dump truck 200A. For example, the controller C3 may use the communication device T3 to acquire the vehicle registration number of the dump truck 200A as an identification number. Specifically, the controller C3 may transmit a transmission request to the controller C2 of the dump truck 200A via the communication device T3 to cause the controller C2 to transmit information about the vehicle such as the vehicle registration number stored in the controller C2.

Thereafter, the controller C3 collates the acquired identification number with the identification number previously stored in the nonvolatile storage device. Through this collation, the controller C3 can determine whether the dump truck 200 is a registered dump truck 200, so that, for example, the paving material can be prevented from being loaded into an unregistered dump truck 200. Alternatively, the controller C3 can prevent the paving material that is to be loaded into a particular dump truck 200 from being loaded into another dump truck 200. Alternatively, the controller C3 can prevent an excess or deficiency between the weight of the paving material that is to be loaded into the dump truck 200 and the weight of the paving material actually loaded into the dump truck 200.

Thereafter, the controller C3 determines whether the loading of the paving material has been completed (step ST3). In this embodiment, the controller C3 determines that loading of the paving material onto the loading platform 50b of the dump truck 200A is completed in response to detecting that the paving material of a predetermined weight is discharged from the mixer 80 based on the information from the mixer 80.

In this embodiment, the plant 300 is a batch plant that is configured to produce, for example, 1 ton of paving material in a single batch process. The weight of the paving material to be loaded on the loading platform 50b of the dump truck 200A is previously set in association with the identification number of the dump truck 200A. Therefore, for example, in a case where the controller C3 is configured to load 9 tons of paving material into the dump truck 200, the controller C3 can determine that loading of paving material is completed in response to detecting that the batch process has been performed 9 times based on information from the mixer 80.

However, the controller C3 may determine whether the loading of the paving material is completed based on information other than the information from the mixer 80. For example, the controller C3 may recognize that the paving material has been dropped from the mixer 80 toward the loading platform 50b of the dump truck 200A, i.e., the batch process has been completed, by performing image recognition processing on the image captured by the monocular camera that serves as the space recognition apparatus M3. The controller C3 may determine that loading of the paving material has been completed in response to detecting that the batch process has been performed for a predetermined number of times.

Alternatively, the controller C3 may determine whether loading of the paving material has been completed based on the output of a weight measuring device such as a weighbridge. In this case, the controller C3 may calculate the weight of the paving material loaded on the loading platform 50b of the dump truck 200 based on the output of the weight measuring device.

In a case where it is determined that loading of the paving material has not been completed (NO in step ST3), the controller C3 repeats the determination in step ST3 until the controller C3 determines that loading of the paving material is completed. In a case where it is determined that the loading of the paving material has been completed (YES in step ST3), the controller C3 transmits the loaded weight to the dump truck 200A (step ST4). The loaded weight is an example of information about the weight of paving material. Specifically, the loaded weight is the total weight of the paving material loaded on the loading platform 50b of the dump truck 200A. In the above example, the loaded weight is the total weight of the paving material loaded into the loading platform 50b in the batch process performed 9 times, i.e., 9 tons.

In this embodiment, the controller C3 transmits information about the loaded weight to the communication device T2 provided on the dump truck 200A via the communication device T3. The information about the loaded weight may include information about the type of paving material, information about the temperature of the paving material, and the like. The information transmitted from the plant 300 to the dump truck 200 may also include the current time, date, the current location, or an identification number of the plant 300.

Through the first transmission processing, the controller C3 provided on the plant 300 can transmit information about the weight of the paving material loaded on the loading platform 50b of the dump truck 200 to the controller C2 provided on the dump truck 200. In this case, the dump truck 200 can store information about the weight of the paving material in the non-volatile storage device in the controller C2. Therefore, when the dump truck 200 subsequently supplies the paving material to the hopper 2 of the asphalt finisher 100, information about the weight of the paving material can be directly transmitted to the asphalt finisher 100. Therefore, even in a place where a satellite communication network or a cellular telephone communication network or the like cannot be used, the dump truck 200 can directly transmit information about the weight of the paving material to the asphalt finisher 100 via short-range wireless communication using Bluetooth (registered trademark) or Wi-Fi (registered trademark) or the like. Thus, with the construction management system SYS, data of the paving materials loaded on the dump truck 200 can be carried together with the paving materials moved by the dump truck 200. That is, the construction management system SYS can physically move, together with the dump truck 200, the data of the paving material stored in the nonvolatile storage device in the controller C2 provided on the dump truck 200.

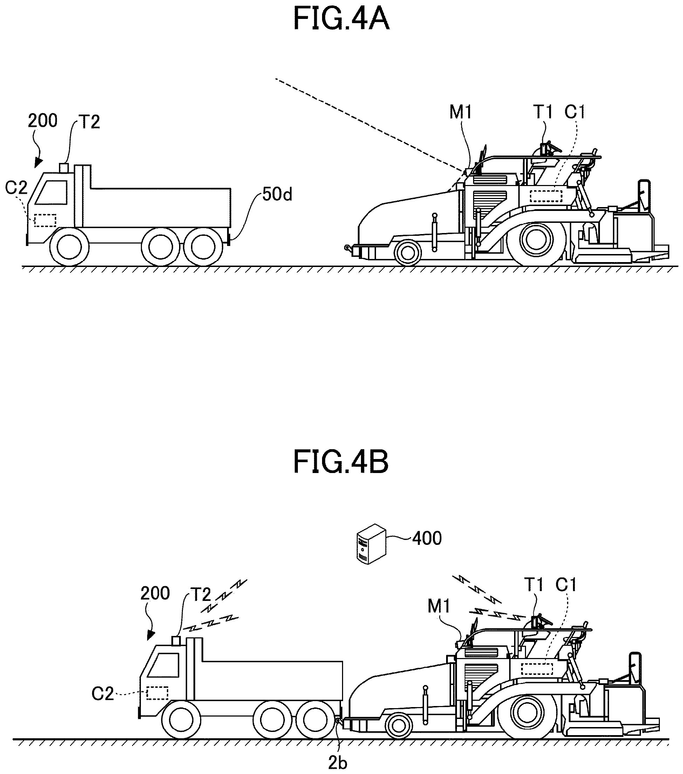

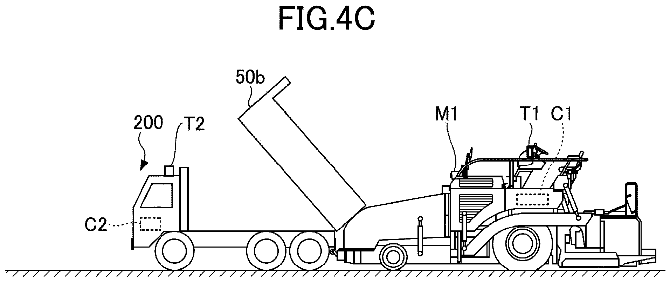

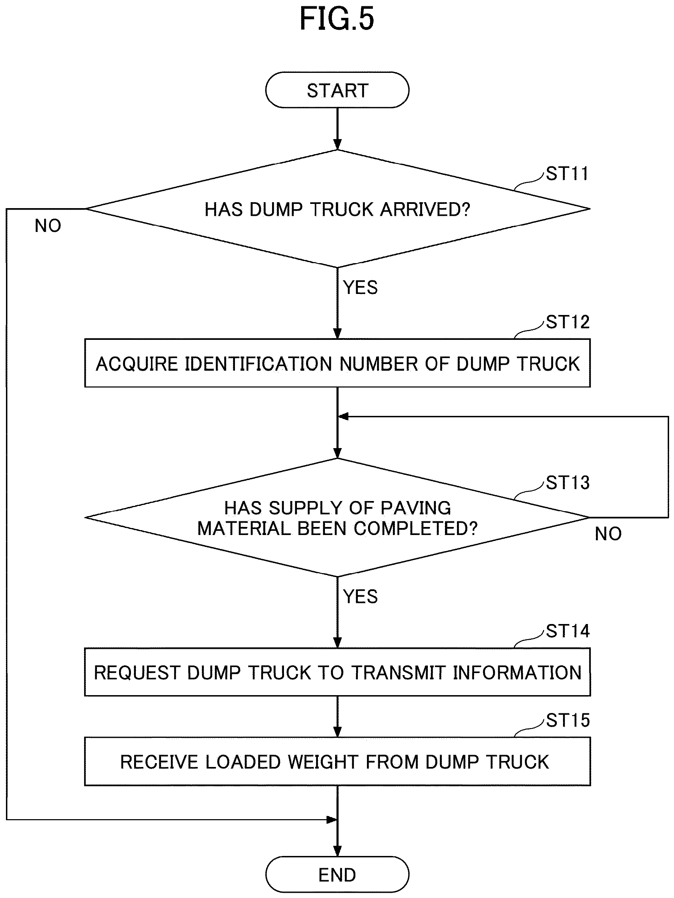

Hereinafter, a process relating to the transmission of information from the dump truck 200 to the asphalt finisher 100 (hereinafter referred to as "second transmission processing") is explained with reference to FIGs. 4A to 4C and FIG. 5. FIGs. 4A to 4C illustrate a scene in which information is transmitted from the dump truck 200 to the asphalt finisher 100. Specifically, FIG. 4A illustrates a scene in which the dump truck 200 is approaching the asphalt finisher 100 while moving backward. FIG. 4B illustrates a scene in which the dump truck 200 and the asphalt finisher 100 are in contact via the push rollers 2b of the asphalt finisher 100. FIG. 4C illustrates a scene in which the dump truck 200 lifts the loading platform 50b to move the paving material on the loading platform 50b into the hopper 2 of the asphalt finisher 100.

FIG. 5 is a flowchart showing an example of the second transmission processing. The controller C1 provided on the asphalt finisher 100 repeatedly executes the second transmission processing with predetermined control intervals.

First, the controller C1 determines whether the dump truck 200 has arrived at a predetermined position (step ST11) . In this embodiment, the controller C1 determines whether the dump truck 200 has arrived at the predetermined position in front of the asphalt finisher 100 based on the output of the space recognition apparatus M1. Specifically, the controller C1 can recognize that the dump truck 200 has arrived at the predetermined position by applying image recognition processing to an image captured by the monocular camera that serves as the space recognition apparatus M1. The predetermined position is, for example, the position of the dump truck 200 when the rear tires of the dump truck 200 come into contact with the push rollers 2b of the asphalt finisher 100, i.e., when the asphalt finisher 100 comes into contact with the dump truck 200 as illustrated in FIG. 4B. However, the predetermined position may be a position of the dump truck 200 when the distance between the front end of the asphalt finisher 100 and the rear end of the dump truck 200 is less than a predetermined distance, i.e., a position of the dump truck 200 before the asphalt finisher 100 and the dump truck 200 come into contact with each other as illustrated in FIG. 4A.

In a case where it is determined that the dump truck 200 has not arrived at the predetermined position (NO in step ST11), the controller C1 ends the second transmission processing.

In a case where it is determined that the dump truck 200A has arrived at the predetermined position (YES in step ST11), the controller C1 acquires an identification number of the dump truck 200 (step ST12). In this embodiment, the identification number of the dump truck 200 is the vehicle registration number indicated on the rear license plate 50d of the dump truck 200.

Specifically, the controller C1 can recognize the vehicle registration number of the dump truck 200 as an identification number by performing image recognition processing on the image of the rear license plate 50d captured by the monocular camera that serves as the space recognition apparatus M1.

Alternatively, the controller C1 may use a device other than the space recognition apparatus M1 to acquire the identification number of the dump truck 200. For example, the controller C1 may acquire the vehicle registration number of the dump truck 200 as an identification number by using the communication device T1. Specifically, the controller C1 may transmit a transmission request to the controller C2 of the dump truck 200 via the communication device T1 to cause the controller C2 to transmit information about the vehicle such as the vehicle registration number stored in the controller C2.

Thereafter, the controller C1 collates the acquired identification number with the identification number previously stored in the nonvolatile storage device. Through this collation, the controller C1 can determine whether the dump truck 200 is a registered dump truck 200, so that, for example, the paving material loaded on the unregistered dump truck 200 can be prevented from being supplied to the asphalt finisher 100. Alternatively, the controller C1 can prevent the paving material that is to be supplied to a particular asphalt finisher 100 from being supplied to another asphalt finisher 100. Alternatively, the controller C1 can prevent an excess or deficiency between the weight of the paving material that is to be supplied to the asphalt finisher 100 and the weight of the paving material actually supplied to the asphalt finisher 100.

Thereafter, the controller C1 determines whether the supply of the paving material has been completed (step ST13). In the present embodiment, the controller C1 can recognize that all of the paving materials loaded on the loading platform 50b of the dump truck 200 have been moved into the hopper 2 by performing image recognition processing on the image captured by the monocular camera that serves as the space recognition apparatus M1. The controller C1 can determine that the supply of the paving materials into the hopper 2 is completed, in response to recognizing that all of the paving materials have been moved.

In a case where it is determined that the supply of the paving material has not been completed (NO in step ST13), the controller C1 repeats the determination in step ST13 until the determines that the supply of the paving material is completed.

In a case where it is determined that the supply of the paving material has been completed (YES in step ST13), the controller C1 requests the dump truck 200 to transmit information (step ST14). In the present embodiment, the controller C1 transmits a transmission request to the controller C2 of the dump truck 200 via the communication device T1 to cause the controller C2 to transmit information about the loaded weight stored in the controller C2.

Thereafter, the controller C1 receives the loaded weight from the dump truck 200 (step ST15). In the present embodiment, the controller C1 receives, via the communication device T1, information about the loaded weight transmitted by the controller C2 via the communication device T2. The controller C1 stores the received information about the loaded weight in the nonvolatile storage device.

At this stage, the controller C1 can calculate the supply weight. The supply weight is the total weight of the paving material supplied into the hopper 2 of the asphalt finisher 100.

Specifically, the controller C1 can calculate the supply weight by integrating the loaded weight transmitted by each of the plurality of dump trucks 200 for supplying the paving material into the hopper 2 of the asphalt finisher 100.

For example, the controller C1 may calculate a total weight of paving materials supplied into the hopper 2 after the asphalt finisher 100 is manufactured (hereinafter referred to as a "total weight after manufacture"), ae total weight of paving materials supplied into the hopper 2 after the most recent maintenance of a particular part (for example, a conveyor plate or a screed plate) (hereinafter referred to as a "total weight after maintenance"), or a total weight of paving materials supplied into the hopper 2 after the current construction has started (hereinafter referred to as a "total weight after start of construction") as the supply weight. Specifically, the controller C1 may calculate the total weight of paving materials supplied into the hopper 2 during any given period as the supply weight.

In a case where the controller C1 requests the dump truck 200 to transmit information about the vehicle in order to acquire the identification number of the dump truck 200, the controller C1 may cause the controller C2 to transmit information about the loaded weight together with information about the vehicle. In this case, the controller C1 can receive information about the loaded weight from the dump truck 200 before the supply of the paving material from the dump truck 200 to the asphalt finisher 100 is completed.

The information transmitted from the dump truck 200 to the asphalt finisher 100 may include the current time, date, or the current location.

Through the second transmission processing, the controller C2 provided on the dump truck 200 can directly transmit information about the loaded weight, which is the weight of the paving material loaded on the loading platform 50b of the dump truck 200, to the controller C1 provided on the asphalt finisher 100.

Specifically, when the paving material is supplied into the hopper 2 of the asphalt finisher 100, the dump truck 200 can directly transmit, to the asphalt finisher 100, information about the weight of the paving material supplied into the hopper 2. Therefore, even in a place where a satellite communication network or a cellular telephone communication network or the like cannot be used, the dump truck 200 can directly transmit information about the weight of the paving material to the asphalt finisher 100 via short-range wireless communication using Bluetooth (registered trademark) or Wi-Fi (registered trademark) or the like. Thus, with the construction management system SYS, data of the paving material loaded on the dump truck 200 can be moved to the asphalt finisher 100 when the paving material is moved by the dump truck 200 to the asphalt finisher 100. That is, the construction management system SYS can move the data of the paving material stored in the nonvolatile storage device of the controller C2 provided on the dump truck 200 to the nonvolatile storage device of the controller C1 provided on the asphalt finisher 100. Therefore, the asphalt finisher 100 can accurately acquire data of the paving material supplied to the asphalt finisher 100 together with the paving material even if the order of arrival of the dump trucks 200 at the construction site is changed due to, for example, road conditions. Furthermore, direct communication between the dump truck 200 and the asphalt finisher 100 can achieve reliable communication even at a construction site, such as in a tunnel, where communication with the outside is impossible.

Furthermore, through the second transmission processing, the asphalt finisher 100 can store information about the loaded weight received from each of the plurality of dump trucks 200 in the nonvolatile storage device in the controller C1.

Furthermore, the controller C1 can calculate the supply weight, which is the total weight of the paving material supplied into the hopper 2 of the asphalt finisher 100, based on the information about the loaded weight received from each of the plurality of dump trucks 200. Therefore, for example, the operator of the asphalt finisher 100 can easily check the supply weight and the like for each day of construction or for each construction site by using the screen of an on-board display device (not illustrated). The on-vehicle display device is, for example, a display device provided on the tractor 1 or the screed 3.

The controller C1 may also transmit, to the management apparatus 400 (see Fig. 4B) via the communication device T1, information including, e.g., information about the loaded weight received from each of the plurality of dump trucks 200.

The management apparatus 400 is a server device installed in a facility such as a communication center. In this embodiment, the management apparatus 400 is a computer including a CPU, a volatile storage device, and a nonvolatile storage device, and is connected to each of the communication devices T1 to T3 through a communication network such as the Internet.

In this case, the manager of the asphalt finisher 100, the manufacturer of the asphalt finisher 100, or the like can acquire various information through a communication network such as the Internet, and therefore, the manager or the manufacturer can confirm, in real time, for example, the supply weight per day of construction, the total weight after manufacture, the total weight after maintenance, or the total weight after the start of construction for each of the plurality of asphalt finishers 100. In addition, the manager, the manufacturer, or the like can confirm the supply weight of each construction site in real time. For example, the manager of the asphalt finisher 100 can estimate the replacement time of consumable parts such as the screed plate or the conveyor plate by confirming the total weight after maintenance at the present time. Thus, the above-described configuration has the effect of facilitating the maintenance and management of the asphalt finisher 100.

Furthermore, for example, the controller C1 may notify the operator of the asphalt finisher 100 in response to determining that the total weight after maintenance with respect to the screed plate, which is an example of the supply weight, exceeds a predetermined weight. This is because the wear of the screed plate depends on the total weight after maintenance with respect to the screed plate. The total weight after maintenance with respect to the screed plate is, for example, the total weight of the paving material supplied into the hopper 2 after the screed plate is replaced. This is also applicable to the conveyor plate.

The supply weight may be corrected according to the type of paving material supplied until then. This is because the wear of components such as the screed plate or the conveyor plate also depends on the type of paving material.

Specifically, the controller C1 may display image information such as a text message prompting replacement or maintenance of the screed plate on the screen of the on-board display device. Alternatively, the controller C1 may cause a sound output device (not illustrated) to output a voice prompting replacement or maintenance of the screed plate. The sound output device is, for example, an on-vehicle speaker provided in the tractor 1 or the screed 3.

As described above, the construction management system SYS according to the embodiment of the present invention is configured to control the transmission of information about the weight of the paving material from the plant 300 to the dump truck 200.

With this configuration, each dump truck can acquire information about the paving material from the plant 300. The information about the paving material includes information about the weight of the paving material loaded on the loading platform 50b. Thus, each dump truck can communicate information about the weight of the paving material directly to the asphalt finisher 100. As a result, the asphalt finisher 100 can calculate the weight of the paving material supplied to the asphalt finisher 100 in real time. The driver of each dump truck can view information about the weight of the paving material loaded on the loading platform 50b on the screen of the display device provided in the driver's compartment 50a. Therefore, the driver of each dump truck can more reliably prevent overloading of the paving material.

The information about the paving material may also include information about the type of paving material. In this case, the driver of each dump truck can view information about the type of paving material loaded on the loading platform 50b on the screen of the display device installed in the driver's compartment 50a. Therefore, the driver of each dump truck can more reliably prevent erroneous conveyance of the paving material.

The manager who manages the amount of the paving material supplied to the asphalt finisher 100 can manage the weight of the paving material supplied to the asphalt finisher 100 in real time without adding up the numerical values printed on paper. For example, the manager can easily find the ratio of the actual construction amount at the present time to the scheduled construction amount on the day, and therefore, the progress of the construction can be easily managed, and furthermore, it can be easily judged whether the amount of ordered paving materials is excessive or insufficient. It should be noted that the scheduled construction amount on the day refers to the weight of the paving material to be supplied to the asphalt finisher 100 on the day, and the actual construction amount refers to the weight of the paving material already supplied to the asphalt finisher 100 on the day.

Furthermore, the construction management system SYS does not use printed paper, and therefore, the weight of the paving material supplied to the asphalt finisher 100 can be prevented from being inaccurate due to the loss of the printed paper or the erroneous input of the numbers printed on the paper.

Furthermore, the construction management system SYS can calculate the supply weight of the paving material more accurately than the conventional configuration that estimates the supply weight of the paving material based on the rotation speed of the conveyor. Specifically, in the conventional configuration, the volume of the paving material conveyed by the conveyor is calculated based on the width of the conveyor, the height of the opening of the conveyor conveyance passage, and the conveying speed of the conveyor, and the weight of the paving material is calculated by multiplying the volume by the specific gravity of the paving material. However, the weight of the paving material calculated by the conventional configuration tends to involve large error and inaccuracy due to the fact that the conveyance efficiency is different for each type of paving material or the specific gravity is different for each type of paving material. The construction management system SYS does not need to perform such estimation, and therefore, can more accurately calculate the supply weight of the paving material.

The construction management system SYS may be configured to recognize the identification number of the dump truck 200 with a camera provided on the plant 300 and associate the recognized identification number with information about the weight of the paving material. The information about the weight of the paving material is, for example, information calculated by the controller C3 in the plant 300. Specifically, the information about the weight of the paving material is information about the weight of the paving material loaded on the loading platform 50b of the particular dump truck 200.

The information about the weight of the paving material is, for example, information about the weight of the paving material summed for each dump truck. Specifically, the information about the weight of the paving material is the weight of the paving material separately summed for each of the plurality of dump trucks 200.

More specifically, the information about the weight of the paving material is information about the weight of the paving material loaded into the loading platform 50b of the particular dump truck 200 by a single loading operation at the plant 300. For example, the information about the weight of the paving material is the weight (9 tons) of the paving material loaded into the loading platform 50b of the particular dump truck 200 in the batch process performed nine times.

The construction management system SYS is configured to control the transmission of information about the weight of the paving material from the dump truck 200 to the asphalt finisher 100.

This arrangement allows the asphalt finisher 100 to more accurately acquire information about the weight of the paving material supplied from the dump truck 200. This is because the asphalt finisher 100 can acquire information about the weight of the paving material directly and in real time from the dump truck 200 that has actually supplied the paving material into the hopper 2.

The construction management system SYS may be configured to recognize the identification number of the dump truck 200 with a camera provided on the asphalt finisher 100.

With this configuration, the asphalt finisher 100 can receive the supply of the paving material from the dump truck 200 after confirming that the dump truck 200 is a registered dump truck 200. Therefore, for example, the construction management system SYS can prevent the paving material that should not be supplied from being erroneously supplied into the hopper 2 of the asphalt finisher 100.

The information about the weight of the paving material may also include information about the identification number of the dump truck 200. In this case, the construction management system SYS may be configured to collate the identification number of the dump truck 200 recognized by the camera with the identification number of the dump truck 200 transmitted from the dump truck 200.

With this configuration, the asphalt finisher 100 can receive the supply of the paving material from the dump truck 200 after confirming that the vehicle registration number indicated on the license plate of the dump truck 200 matches the vehicle registration number stored in the controller C2 provided on the dump truck 200. Specifically, the asphalt finisher 100 can receive the supply of the paving material from the dump truck 200 after confirming whether the information stored in the controller C2 is accurate. Therefore, for example, the construction management system SYS can prevent the paving material that should not be supplied from being erroneously supplied into the hopper 2 of the asphalt finisher 100.

The construction management system SYS is configured to calculate the weight of the paving material supplied to the asphalt finisher 100 based on information about the weight of the paving material transmitted from the dump truck 200, and to prompt maintenance of the asphalt finisher 100 in response to determining that the calculated weight becomes equal to or more than a predetermined value.

With this configuration, the construction management system SYS can timely inform the manager of the asphalt finisher 100 of the replacement timing of consumable parts such as the screed plate or the conveyor plate.

A preferred embodiment of the present invention has been hereinabove described. However, the present invention is not limited to the above-described embodiment. Various modifications, replacements, and the like may be applied to the embodiment described above without departing from the scope of the present invention as defined by the appended claims.

This application claims priority to Japanese patent application No. 2020-041584 filed on March 11, 2020 and priority to Japanese patent application No. 2020-041586 filed on March 11, 2020.

### DESCRIPTION OF THE REFERENCE NUMERALS

1 tractor
2 hopper
2b push rollers
2c hopper cylinder
3 screed
3a leveling arm
3b screed lift cylinder
5 rear wheels
6 front wheels
50a driver's compartment
50b loading platform
50c front license plate
50d rear license plate
80 mixer
81 trolley
82 hot silo
100 asphalt finisher
200, 200A, 200B dump truck
300 plant
400 management apparatus
C1 to C3 controller
M1, M3 space recognition apparatus
SYS construction management system
T1 to T3 communication device

## Claims

1. A construction management system (SYS) comprising a dump truck (200, 200A, 200B) and an asphalt finisher (100), wherein the asphalt finisher (100) includes a first controller (C1) configured to control transmission from the dump truck (200, 200A, 200B) to the asphalt finisher (100), of information about a weight of a paving material, **characterized in that** the first controller (C1) is configured:
to calculate a weight of the paving material supplied to the asphalt finisher (100) based on the information about the weight of the paving material transmitted from the dump truck (200, 200A, 200B), and
to prompt maintenance of the asphalt finisher (100) in response to determining that the calculated weight becomes equal to or more than a predetermined value.

2. The construction management system (SYS) according to claim 1, wherein the asphalt finisher (100) includes a camera (M1) configured to recognize an identification number of the dump truck (200, 200A, 200B)

3. The construction management system (SYS) according to claim 2, wherein the information about the weight of the paving material includes information about the identification number of the dump truck (200, 200A, 200B) and the first controller (C1) is configured to collate the recognized identification number of the dump truck (200, 200A, 200B) with the identification number of the dump truck (200, 200A, 200B) transmitted from the dump truck (200, 200A, 200B).

4. A construction management system (SYS) according to claims 1-3, further comprising a plant (300), wherein the dump truck (200, 200A, 200B) includes a second controller (C2) configured to control the transmission, from the plant (300) to the dump truck (200, 200A, 200B), of information about a weight of a paving material.

5. The construction management system (SYS) according to claim 4, wherein the plant (300) includes a camera (M3), and
the system is configured to recognize an identification number of the dump truck (200, 200A, 200B) by the camera (M3) provided on the plant (300), and
to associate the recognized identification number with the information about the weight of the paving material.

6. The construction management system (SYS) according to claim 5, wherein the information about the weight of the paving material transmitted from the plant (300) to the dump truck (200, 200A, 200B) is information about a weight of the paving material summed for each dump truck (200, 200A, 200B) of a plurality of dump trucks (200, 200A, 200B).

7. An asphalt finisher (100) comprising:
a tractor (1);
a hopper (2) provided on a front side of the tractor (1);
a conveyer configured to convey a paving material in the hopper (2) to a rear side of the tractor (1);
a screw configured to spread, in a vehicle width direction, the paving material that is conveyed by the conveyer and placed on a road surface;
a screed (3) configured to level, on a rear side of the screw, the paving material that is spread by the screw; and
a communication device (T1) configured to receive information about a weight of the paving material from a dump truck (200, 200A, 200B),
**characterized in that** the asphalt finisher (100) further comprises a first controller (C1), wherein the first controller (C1) is configured to calculate a weight of the paving material supplied to the asphalt finisher (100) based on the information about the weight of the paving material received by the communication device (T1) from the dump truck (200, 200A, 200B), and to prompt maintenance of the asphalt finisher (100) in response to determining that the calculated weight becomes equal to or more than a predetermined value.

8. The asphalt finisher (100) according to claim 7, further comprising:
a camera (M1) being configured to recognize an identification number of the dump truck (200, 200A, 200B).

9. The asphalt finisher (100) according to claim 8, wherein the information about the weight of the paving material includes information about the identification number of the dump truck (200, 200A, 200B), and
the first controller (C1) is configured to collate the recognized identification number of the dump truck (200, 200A, 200B) with the identification number of the dump truck (200, 200A, 200B) transmitted by the dump truck (200, 200A, 200B) to the communication device (T1)

10. The asphalt finisher (100) according to claim 7, wherein the information about the weight of the paving material is information transmitted from a plant (300) to the dump truck (200, 200A, 200B).

11. The asphalt finisher (100) according to claim 10, wherein the information about the weight of the paving material is information about a weight of the paving material summed for each dump truck (200, 200A, 200B) of a plurality of dump trucks (200, 200A, 200B).

## Patentansprüche

1. Bauverwaltungssystem (SYS), das einen Muldenkipper (200, 200A, 200B) und einen Asphaltfertiger (100) umfasst, wobei der Asphaltfertiger (100) eine erste Steuerung (C1) umfasst, die konfiguriert ist, Übertragung zu steuern von dem Muldenkipper (200, 220A, 200B) an den Asphaltfertiger (100), von Informationen über ein Gewicht eines Straßendeckenmaterials, **dadurch gekennzeichnet, dass** die erste Steuerung (C1) konfiguriert ist, ein Gewicht des dem Asphaltfertiger (100) zugeführten Straßendeckenmaterials auf der Grundlage der von dem Muldenkipper (200, 200A, 200B) übertragenen Informationen über das Gewicht des Straßendeckenmaterials zu berechnen, und
um Versorgung des Asphaltfertigers (100) zu veranlassen, als Reaktion auf Bestimmen, dass das berechnete Gewicht gleich oder größer als ein vorbestimmter Wert wird.

2. Bauverwaltungssystem (SYS) nach Anspruch 1, wobei der Asphaltfertiger (100) eine Kamera (M1) umfasst und konfiguriert ist, eine Identifikationsnummer des Muldenkippers (200, 200A, 200B) zu erkennen.

3. Bauverwaltungssystem (SYS) nach Anspruch 2, wobei die Informationen über das Gewicht des Straßendeckenmaterials Informationen über die Identifikationsnummer des Muldenkippers (200, 200A, 200B) umfassen, und
die erste Steuerung konfiguriert ist, die erkannte Identifikationsnummer des Muldenkippers (200, 200A, 200B) der Identifikationsnummer des Muldenkippers (200, 200A, 200B), die von dem Muldenkipper (200, 200A, 200B) übertragen wurde, zuzuordnen.

4. Bauverwaltungssystem (SYS) nach Ansprüchen 1-3, ferner umfassend eine Anlage (300), wobei der Muldenkipper (200, 200A, 200B) eine zweite Steuerung (C2) umfasst, die konfiguriert ist, die Übertragung von der Anlage (300) zu dem Muldenkipper (200, 200A, 200B) an Informationen über ein Gewicht eines Straßendeckenmaterials zu steuern.

5. Das Bauverwaltungssystem (SYS) nach Anspruch 4, wobei die Anlage (300) eine Kamera (M3) umfasst, und
das System so konfiguriert ist, dass es eine Identifikationsnummer des Muldenkippers (200, 200A, 200B) durch die an der Anlage (300) vorgesehene Kamera (M3) erkennt, und
die erkannte Identifikationsnummer mit den Informationen über das Gewicht des Straßendeckenmaterials in Verbindung bringt.

6. Bauverwaltungssystem (SYS) nach Anspruch 5, wobei die Information über das Gewicht des Straßendeckenmaterials, das von der Anlage (300) an den Muldenkipper (299, 200A, 200b) übertragen wird, eine Information über ein Gewicht des Straßendeckenmaterials ist, das für jeden Muldenkipper (200, 200A, 200B) von mehreren Muldenkippern (200, 200A, 200B) summiert wird.

7. Asphaltfertiger (100), umfassend:
einen Traktor (1);
einen Trichter (2), der an einer Vorderseite des Traktors (1) vorgesehen ist;
einen Förderer, der so konfiguriert ist, dass er ein Straßendeckenmaterial in dem Trichter (2) zu einer Rückseite des Traktors (1) fördert;
eine Schnecke, die so konfiguriert ist, dass sie das von dem Förderer geförderte und auf einer Straßenoberfläche aufgebrachte Straßendeckenmaterial in einer Fahrzeugbreitenrichtung verteilt;
eine Bohle (3), die so konfiguriert ist, dass sie das von der Schnecke verteilte Straßendeckenmaterial an einer Rückseite der Schnecke nivelliert; und
eine Kommunikationsvorrichtung (T1), die so konfiguriert ist, dass sie Informationen über ein Gewicht des Straßendeckenmaterials von einem Muldenkipper (200, 200A, 200B) empfängt,
**dadurch gekennzeichnet, dass** der Asphaltfertiger (100) ferner eine erste Steuerung (C1) umfasst, wobei die erste Steuerung (C1) so konfiguriert ist, dass sie ein Gewicht des dem Asphaltfertiger (100) zugeführten Straßendeckenmaterials auf der Grundlage der Informationen über das Gewicht des Straßendeckenmaterials berechnet, die von der Kommunikationsvorrichtung (T1) von dem Muldenkipper (200, 200A, 200B) empfangen werden, und dass sie Versorgung des Asphaltfertigers (100) veranlasst, als Reaktion auf Bestimmen, dass das berechnete Gewicht gleich einem oder größer als ein vorbestimmter Wert wird.

8. Asphaltfertiger (100) nach Anspruch 7, ferner umfassend:
eine Kamera (M1), die so konfiguriert ist, dass sie eine Identifikationsnummer des Muldenkippers (200, 200A, 200B) erkennt.

9. Asphaltfertiger (100) nach Anspruch 8, wobei die Informationen über das Gewicht des Straßendeckenmaterials Informationen über die Identifikationsnummer des Muldenkippers (200, 200A, 200B) umfassen, und
die erste Steuerung (C1) so konfiguriert ist, dass sie die erkannte Identifikationsnummer des Muldenkippers (200, 200A, 200B) mit der Identifikationsnummer des Muldenkippers (200, 200A, 200B), die durch den Muldenkipper (200, 200A, 200B) an die Kommunikationsvorrichtung (T1) übertragen wurde, vergleicht.

10. Asphaltfertiger (100) nach Anspruch 7, wobei die Informationen über das Gewicht des Straßendeckenmaterials Informationen sind, die von einer Anlage (300) an den Muldenkipper (200, 200A, 200B) übertragen werden.

11. Asphaltfertiger (100) nach Anspruch 10, wobei die Informationen über das Gewicht des Straßendeckenmaterials Informationen über ein Gewicht des Straßendeckenmaterials sind, die für jeden Muldenkipper (200, 200A, 200B) von mehreren Muldenkippern (200, 200A, 200B) summiert werden.

## Revendications

1. Un système de gestion de construction (SYS) comprenant un camion-benne (200, 200A, 200B) et un finisseur d'asphalte (100),
dans lequel le finisseur d'asphalte (100) comprend un premier dispositif de commande (C1) configuré pour commander la transmission depuis le camion-benne (200, 200A, 200B) vers le finisseur d'asphalte (100), d'informations sur un poids d'un matériau de pavage, **caractérisé en ce que** le premier dispositif de commande (C1) est configuré :
pour calculer un poids du matériau de pavage fourni au finisseur d'asphalte (100) sur la base des informations sur le poids du matériau de pavage transmises depuis le camion-benne (200, 200A, 200B), et
pour déclencher l'entretien du finisseur d'asphalte (100) en réponse à la détermination du fait que le poids calculé devient égal ou supérieur à une valeur prédéterminée.

2. Le système de gestion de construction (SYS) selon la revendication 1, dans lequel le finisseur d'asphalte (100) comprend une caméra (M1), configurée pour reconnaître un numéro d'identification du camion-benne (200, 200A, 200B).

3. Le système de gestion de construction (SYS) selon la revendication 2, dans lequel les informations sur le poids du matériau de pavage comprennent des informations sur le numéro d'identification du camion-benne (200, 200A, 200B) et le premier dispositif de commande (C1) est configuré pour collationner le numéro d'identification reconnu du camion-benne (200, 200A, 200B) avec le numéro d'identification du camion-benne (200, 200A, 200B) transmis par le camion-benne (200, 200A, 200B).

4. Un système de gestion de construction (SYS) selon les revendications 1 à 3, comprenant en outre une installation (300), dans lequel le camion-benne (200, 200A, 200B) comprend un deuxième dispositif de commande (C2) configuré pour commander la transmission, depuis l'installation (300) au camion-benne (200, 200A, 200B), d'informations sur un poids d'un matériau de pavage.

5. Le système de gestion de construction (SYS) selon la revendication 4, dans lequel l'installation (300) comprend une caméra (M3), et
le système est configuré pour reconnaître un numéro d'identification du camion-benne (200, 200A, 200B) à l'aide de la caméra (M3) disposée sur l'installation (300), et
pour associer le numéro d'identification reconnu aux informations sur le poids du matériau de pavage.

6. Le système de gestion de construction (SYS) selon la revendication 5, dans lequel les informations sur le poids du matériau de pavage transmises depuis l'installation (300) au camion-benne (200, 200A, 200B) sont des informations sur un poids du matériau de pavage additionné pour chaque camion-benne (200, 200A, 200B) d'une pluralité de camions-benne (200, 200A, 200B).

7. Un finisseur d'asphalte (100) comprenant :
un tracteur (1) ;
une trémie (2) disposée sur un côté avant du tracteur (1) ;
un convoyeur configuré pour transporter un matériau de pavage dans la trémie (2) vers un côté arrière du tracteur (1) ;
une vis configurée pour étaler, dans la direction de la largeur du véhicule, le matériau de pavage qui est transporté par le convoyeur et placé sur une surface de route ;
une table (3) configurée pour niveler, sur un côté arrière de la vis, le matériau de pavage qui est étalé par la vis ; et
un dispositif de communication (T1) configuré pour recevoir des informations sur le poids du matériau de pavage depuis un camion-benne (200, 200A, 200B),
**caractérisé en ce que** le finisseur d'asphalte (100) comprend en outre un premier dispositif de commande (C1), le premier dispositif de commande (C1) étant configuré pour calculer un poids du matériau de pavage fourni au finisseur d'asphalte (100) sur la base des informations concernant le poids du matériau de pavage reçues par le dispositif de communication (T1) depuis le camion-benne (200, 200A, 200B), et pour déclencher la maintenance du finisseur d'asphalte (100) en réponse à la détermination du fait que le poids calculé devient égal ou supérieur à une valeur prédéterminée.

8. Le finisseur d'asphalte (100) selon la revendication 7, comprenant en outre :
une caméra (M1) configurée pour reconnaître un numéro d'identification du camion-benne (200, 200A, 200B).

9. Le finisseur d'asphalte (100) selon la revendication 8, dans lequel les informations sur le poids du matériau de pavage comprennent des informations sur le numéro d'identification du camion-benne (200, 200A, 200B), et
le premier dispositif de commande (C1) est configuré pour collationner le numéro d'identification reconnu du camion-benne (200, 200A, 200B) avec le numéro d'identification du camion-benne (200, 200A, 200B) transmis par le camion-benne (200, 200A, 200B) au dispositif de communication (T1).

10. Le finisseur d'asphalte (100) selon la revendication 7, dans lequel les informations sur le poids du matériau de pavage sont des informations transmises depuis une installation (300) au camion-benne (200, 200A, 200B).

11. Le finisseur d'asphalte (100) selon la revendication 10, dans lequel les informations sur le poids du matériau de pavage sont des informations sur un poids du matériau de pavage additionné pour chaque camion-benne (200, 200A, 200B) d'une pluralité de camions-benne (200, 200A, 200B).
